# FASCICULE DE BREVET EUROPEEN

(11) **EP 1 526 734 B1**
(45) Date de publication et mention de la délivrance du brevet: **13.12.2006**
(21) Numéro de dépôt: 03292626.3
(22) Date de dépôt: 21.10.2003
(51) Int. Cl.: H04N 7/24, H04N 7/52, H04N 7/58, H04L 12/18, H04L 29/08, H04L 29/06

(54) **Procédé et dispositif de transmission de données associées à des informations transmises**
Verfahren und Vorrichtung zur Übertragung von Daten, die mit übertragenen Informationen verknüpft sind
Process and apparatus for transmitting data associated with transmitted information

(43) Date de publication de la demande: 27.04.2005
(73) Titulaire: FRANCE TELECOM, 75015 Paris (FR)
(72) Inventeur: Amonou, Isabelle, 35235 Thorigne Fouillard (FR); Acket, Yves, 35000 Rennes (FR); Geslin, Franck, 35000 Rennes (FR)
(74) Mandataire: Maillet, Alain

(56) Documents cités:
- EP-A- 1 043 852
- EP-A- 1 276 327
- US-A- 6 047 317
- US-A1- 2003 009 763
- US-A1- 2003 093 790
- LADEBUSCH U: "EINFUEHRUNG IN DEN DVB-DATENRUNDFUNK" FERNSEH UND KINOTECHNIK, VDE VERLAG GMBH. BERLIN, DE, vol. 52, no. 7, juillet 1998 (1998-07), pages 425-432, XP000870644 ISSN: 0015-0142

## Description

La présente invention concerne un procédé et un dispositif de transmission de données associées à des informations transmises.

Plus précisément, l'invention se situe dans le domaine de la transmission de données sur un réseau de communication pouvant être par exemple un réseau de diffusion de données ou un réseau de télécommunication tel qu'un réseau Internet.

Les informations transmises pour être reproduites par des dispositifs de reproduction d'informations à des usagers sont par exemple et de manière non limitative des informations audiovisuelles diffusées par des chaînes de télévision, des informations audio ou des informations textuelles.

Les données associées à ces informations sont par exemple des données représentatives des informations audiovisuelles transmises et/ou des données comprenant des informations pour la configuration d'un moyen de décodage des informations audiovisuelles et/ou des données de signalisation du réseau de communication et/ou des données d'attributs des informations audiovisuelles.

Les données représentatives des informations audiovisuelles sont classiquement appelées méta-données. Les méta-données sont par exemple et de manière non limitative le guide des programmes audiovisuels transmis, ou pour un programme audiovisuel prédéterminé, des données descriptives de ce programme telles que son titre, une description sommaire et/ou détaillée de celui-ci, un descriptif d'un ou des acteurs jouant dans le programme audiovisuel ou une ou plusieurs critiques de celui-ci.

Selon la norme DVB, acronyme de Digital Video Broadcast, il est possible de transmettre des données représentatives des contenus des programmes audiovisuels diffusés. Ces données sont conformes à la norme DVB-SI. DVB-SI est l'acronyme de Digital Vidéo Broadcast Service Information ou signalisation de service de diffusion vidéo numérique. Les programmes audiovisuels sont dans ce cas, codés selon le standard MPEG, acronyme de Motion Picture Expert Group et les données représentatives des contenus des programmes audiovisuels diffusés sont diffusées sous forme de tables de données sur le même canal de diffusion que les programmes audiovisuels.

Les tables de données sont transmises périodiquement sur le canal de diffusion de manière à ce qu'un dispositif de réception puisse à tout instant recevoir celles-ci.

Selon cette norme, les données associées aux programmes audiovisuels diffusés sont toutes diffusées périodiquement. De plus, il n'est pas possible, pour un dispositif de réception recevant ces données, de ne recevoir qu'uniquement celles-ci. Ces données étant transmises sur le même canal que les programmes audiovisuels, le dispositif de réception doit recevoir à la fois les données associées aux programmes audiovisuels et les programmes audiovisuels même si seules les données associées aux programmes audiovisuels sont utiles au dispositif de réception.

De plus, la transmission périodique de ces données selon cette même norme n'est pas adaptée aux réseaux de communication qui ne garantissent pas une bande passante constante.

Selon la recommandation RFC 2974 connue sous la dénomination SAP, acronyme de Session Announcement Protocol, il est prévu la transmission de manière périodique de paquets d'annonce de sessions sur un canal de diffusion. Ces paquets d'annonce de sessions sont associés à des sessions de conférence multimédia sur le réseau Internet qui sont transportées sur le réseau Internet sur des canaux différents du canal de diffusion de paquets d'annonce de sessions.

Selon cette recommandation, un seul type de données, en l'occurrence des paquets d'annonce de sessions sont transmis.

La demande de brevet EP 1043852 divulgue une méthode de transmission cyclique d'informations sur des programmes audiovisuels dans lequel les informations sur des programmes sont transmises dans un cycle un nombre de fois plus élevé que d'autres informations sur des programmes.

La demande de brevet US 2003/0009763 divulgue une méthode de transmission cyclique d'informations sur des programmes audiovisuels dans lequel les informations sur des programmes sont transmises dans un cycle un nombre de fois plus élevé que d'autres informations sur des programmes.

Ainsi, les solutions proposées dans l'état de la technique n'adressent pas les problèmes liés à la transmission de données comprenant une pluralité de données dont l'importance des données les unes par rapport aux autres doit être respectée en dépit des variations des conditions existant sur le réseau de communication.

Ces mêmes solutions de l'état de la technique ne permettent pas une optimisation du délai de réception de données associées à des informations en fonction de leur importance.

L'invention a pour but de résoudre les inconvénients de l'art antérieur en proposant un procédé selon la revendication indépendante 1 un dispositif selon la revendication indépendante 14 et un programme d'ordinateur selon la revendication indépendante 15 permettant de transmettre sur un réseau de communication des données d'importance différentes tout en assurant un délai de réception de ces données minimum et fonction de leur importance les unes par rapport aux autres.

A cette fin, selon un premier aspect, l'invention propose un procédé de transmission de données associées à des informations transmises sur un réseau de communication, caractérisé en ce que les données sont divisées en groupes de données, à chaque groupe de données est associée une information représentative de l'importance des données du groupe de données et en ce que le procédé comporte les étapes de détermination d'un cycle de transmission des groupes de données et d'insertion dans le cycle de transmission déterminé de chaque groupe de données, chaque groupe de données étant inséré un nombre de fois fonction de l'importance respective des données du groupe de données.

Corrélativement, l'invention concerne un dispositif de transmission de données associées à des informations transmises sur un réseau de communication, caractérisé en ce que les données sont divisées en groupes de données, à chaque groupe de données est associée une information représentative de l'importance des données du groupe de données et en ce que le dispositif comporte des moyens de détermination d'un cycle de transmission des groupes de données et des moyens d'insertion de chaque groupe de données dans le cycle de transmission déterminé, chaque groupe de données étant inséré un nombre de fois fonction de l'importance respective des données du groupe de données.

Ainsi, il est possible de transmettre des données constituées d'une pluralité de données dont l'importance est variable pour les dispositifs recevant ces données.

En insérant plusieurs fois dans un même cycle de transmission les groupes de données importantes, le délai de réception des données importantes est réduit.

Selon un autre aspect de l'invention, le réseau de communication est un réseau de diffusion et les informations et les données sont transmises sur le réseau de diffusion.

Ainsi, il est possible de transmettre sur un réseau de diffusion des données comprenant une pluralité de données dont l'importance est variable pour les dispositifs recevant ces données.

En insérant plusieurs fois dans un même cycle de transmission les groupes de données importantes, le délai de réception des données importantes est réduit.

Selon un autre aspect de l'invention, le réseau de communication est un réseau de télécommunication. Les informations sont transmises sur un canal de transmission du réseau de télécommunication et les données sont transmises sur un canal prédéterminé du réseau de télécommunication différent du canal sur lequel les informations sont transmises.

Ainsi, il n'est pas nécessaire de décoder les données et les informations auxquelles les données sont associées pour une seule utilisation des données. En effet, seules les données associées aux informations peuvent être utiles dans un premier temps au dispositif de traitement recevant ces données ou à l'usager. En séparant les canaux de transmission, il est alors possible de ne traiter que les données transmises sur le canal prédéterminé et donc de réduire la complexité du traitement à effectuer par le dispositif de traitement recevant ces données.

Selon un autre aspect de l'invention, à chaque insertion d'un groupe de données dans le cycle de transmission des groupes de données, on transmet le groupe de données inséré.

Ainsi, la transmission des groupes de données est effectuée en temps réel et la quantité de données devant être mémorisées avant leur transmission est réduite.

Selon un autre aspect de l'invention, si un groupe de données est inséré plusieurs fois dans le cycle de transmission, les insertions du groupe de données sont espacées d'un nombre prédéterminé d'insertions d'autres groupes de données dans le cycle de transmission.

Ainsi, en espaçant les insertions d'un groupe de données d'un nombre prédéterminé d'insertions d'autres groupes de données dans le cycle de transmission, lorsqu'un dispositif de traitement se connecte au réseau de télécommunication, il reçoit dans un bref délai le ou les groupes d'informations importants. Le délai pour la réception de ces groupes de données importants est donc réduit.

De plus, en espaçant les insertions d'un groupe de données d'un nombre prédéterminé d'insertions, le groupe de données est transmis selon une périodicité fonction du temps de transmission des autres groupes de données insérés et autorise ainsi une possible fluctuation de cette périodicité.

Selon un autre aspect de l'invention, les groupes de données sont insérés dans le cycle de transmission selon un ordre fonction de leur importance vis-à-vis des autres groupes de données.

Ainsi, en insérant en premier les groupes de données les plus importants dans le cycle de transmission, l'insertion de ces groupes importants plusieurs fois et avec une certaine périodicité dans un cycle de transmission est facilitée. De plus, même si l'intervalle de temps existant entre deux cycles de transmission est important, un dispositif de traitement se connectant au réseau de télécommunication entre deux cycles de transmission reçoit les groupes de données dans un délai optimisé.

Selon un autre aspect de l'invention, on ordonne les groupes de données en fonction de leur importance. On associe un compteur à chaque groupe de données, la valeur de chaque compteur étant représentative du nombre minimum d'insertions d'autres groupes de données avant une insertion du groupe de données auquel chaque compteur est associé dans le cycle d'insertion et on détermine le groupe de données à insérer en fonction de l'ordre des groupes de données, de la valeur des compteurs associés et du nombre de fois qu'au moins un groupe de données a été inséré dans le cycle de transmission.

Selon un autre aspect de l'invention, préalablement à la première insertion d'un groupe de données dans le cycle de transmission, chaque compteur est mis à une valeur prédéterminée, à chaque insertion d'un groupe de données, le compteur associé au groupe de données inséré est mis à une valeur égale au nombre d'insertions d'autres groupes de données espaçant les insertions du groupe de données auquel le compteur est associé et à chaque insertion d'un groupe de données dans le cycle de transmission la valeur de chaque compteur associé aux autres groupes de données est décrémentée.

Selon un autre aspect de l'invention, à chaque insertion d'un groupe de données, on prend le premier des groupes de données ordonnés comme groupe de données courant et on vérifie si la valeur du compteur associé au groupe de données courant est strictement supérieure à la valeur prédéterminée ou si le groupe de données courant a été inséré dans le cycle de transmission un nombre de fois prédéterminé, on considère le groupe de données suivant des groupes de données ordonnés comme le groupe de données courant.

Selon un autre aspect de l'invention, on détermine l'instant d'insertion d'un groupe de données à partir de la taille du ou des groupes de données préalablement insérés et du débit du canal de transmission.

Ainsi, en prenant en compte le débit du canal de transmission, on évite tout problème lié à la saturation de celui-ci.

Selon un autre aspect de l'invention, on détermine le nombre total d'insertions de groupes de données à insérer dans le cycle de transmission et lorsque l'on a inséré des groupes de données dans le cycle de transmission un nombre de fois égal au nombre total d'insertions, on attend un temps prédéterminé, on détermine un nouveau cycle de transmission et on insère des groupes d'informations dans le nouveau cycle de transmission déterminé.

Selon un autre aspect de l'invention, le temps prédéterminé est nul.

Selon un autre aspect de l'invention, on analyse le cycle de transmission comprenant les groupes de données insérés et on modifie le débit du canal de transmission et/ou les informations représentatives de l'importance des données d'au moins un groupe de données en fonction de l'analyse du cycle de transmission.

Ainsi, il est possible de modifier le cycle de transmission en temps réel et en fonction par exemple de la taille des groupes de données transmis. Cette analyse et cette modification permettent de garantir un délai de réception optimal des groupes de données importants.

Selon un autre aspect de l'invention, les informations sont des informations audiovisuelles et les données sont des données comprenant des informations pour la configuration d'un moyen de décodage des informations audiovisuelles et/ou des données représentatives des contenus des informations audiovisuelles transmises et/ou des données de signalisation du ou de chaque canal du réseau de télécommunication comportant les informations transmises et/ou des données d'attributs des informations audiovisuelles.

Ainsi, il est désormais possible de transmettre sur un même canal différents types de données tout en maintenant un délai de réception optimal des groupes de données importants. Ces données peuvent ainsi être des données de configuration de moyen de décodage ou des informations pour l'obtention d'informations nécessaires à la réception des informations auxquelles les données sont associées, voire d'autres données qui permettent à un usager recevant ces données de s'informer ou de sélectionner les informations audiovisuelles qu'il désire recevoir.

Les avantages des dispositifs étant identiques à ceux mentionnés pour les procédés, ceux-ci ne seront pas rappelés.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un système de transmission de données selon la présente invention ;
la Fig. 2 représente un schéma bloc des différents éléments constitutifs du dispositif de transmission de données de la présente invention ;
les Figs. 3a et 3b représentent l'algorithme d'insertion de données effectué par le dispositif de transmission selon la présente invention;
la Fig. 4 représente l'algorithme de transmission de données effectué par le dispositif de transmission selon la présente invention ;
la Fig. 5 représente l'algorithme d'analyse de cycle de transmission effectué par le dispositif de transmission selon la présente invention.

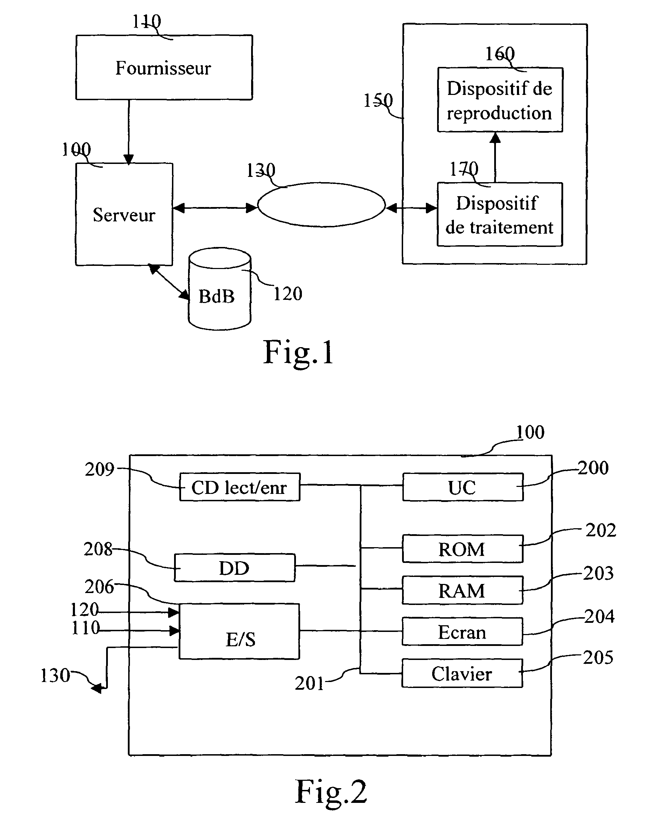

La **Fig. 1** représente un système de transmission de données selon la présente invention.

Le système de transmission de données associées à des informations comprend un dispositif de transmission tel qu'un serveur 100 apte à transmettre une pluralité de groupes de données dans un cycle de transmission déterminé.

Un fournisseur d'informations 110 délivre des informations telles que par exemple un programme audiovisuel au serveur 100.

Le fournisseur d'informations 110 délivre aussi au serveur 100 des données associées aux programmes audiovisuels. Ces données peuvent aussi être délivrées par d'autres fournisseurs non représentés en Fig. 1.

Ces données sont par exemple délivrées sous forme de groupes de données, chaque groupe de données comprenant des données d'un type prédéterminé. En variante, le serveur 100 reçoit ces données, forme des groupes de données et associe à chaque groupe de données une information représentative de l'importance des données contenues dans chaque groupe.

Au serveur 100, est associée une base de données 120. Cette base de données 120 est distante du serveur 100. Elle peut bien entendu être intégrée au serveur 100.

La base de données 120 contient par exemple des données complémentaires aux méta-données délivrées par le fournisseur d'informations 110.

Le serveur 100 associe les données délivrées par le fournisseur d'informations 110 ainsi que les données comprises dans la base de données 120, forme un groupe de données comprenant ces données, insère celles-ci dans le cycle de transmission selon l'invention et transfère celles-ci aux dispositifs de traitement 170 des usagers 150.

Le serveur 100 distribue ces programmes à des usagers 150 par l'intermédiaire du réseau de télécommunication 130 tel que par exemple un réseau Internet.

Lorsque les usagers 150 sont abonnés au service de distribution d'informations, ces programmes audiovisuels sont transmis par l'intermédiaire d'un ou de plusieurs canaux de transmission du réseau Internet 130 aux dispositifs de traitement 170 respectifs des usagers 150 par l'intermédiaire du réseau Internet 130.

Le serveur 100 délivre aussi aux dispositifs de traitement 170 des abonnés 150, simultanément à la diffusion de ces programmes audiovisuels, les différents groupes de données insérés dans un cycle de transmission et transmis sur un canal de diffusion du réseau de télécommunication 130. Ce canal est préférentiellement un canal de transmission différent du ou des canaux sur lesquels les programmes audiovisuels sont transmis.

Les données associées à ces informations sont transmises sous forme de groupes de données. Un groupe de données comprend des données représentatives des informations audiovisuelles transmises ou des données comprenant des données pour la configuration d'un moyen de décodage des informations audiovisuelles ou des données de signalisation du réseau de télécommunication ou des données d'attributs des informations audiovisuelles.

A ces groupes de données, sont associées des informations représentatives de l'importance des données contenues dans ces groupes de données.

Au groupe de données comprenant des données de signalisation du réseau de télécommunication utilisé par le moyen de télécommunication compris dans le dispositif de traitement 170, est associée une information représentative de l'importance de ces données. Ces données sont essentielles pour le moyen de télécommunication compris dans le dispositif de traitement 170. L'information représentative de l'importance de ces données reflète le essentiel caractère de celles-ci.

Au groupe de données comprenant des données pour la configuration d'un moyen de décodage des informations audiovisuelles compris dans le dispositif de traitement 170, est associée une information représentative de l'importance de ces données. Ces données sont très importantes pour le moyen de décodage des informations audiovisuelles compris dans le dispositif de traitement 170. L'information représentative de l'importance de ces données reflète le caractère très important de celles-ci.

Aux groupes de données comprenant des données représentatives des informations audiovisuelles transmises ou des données d'attributs des informations audiovisuelles, sont associées des informations représentatives de l'importance de ces données. Pour ces groupes de données, les informations représentatives de l'importance de ces données reflètent le caractère moins important de celles-ci par rapport aux groupes de données précédemment mentionnés.

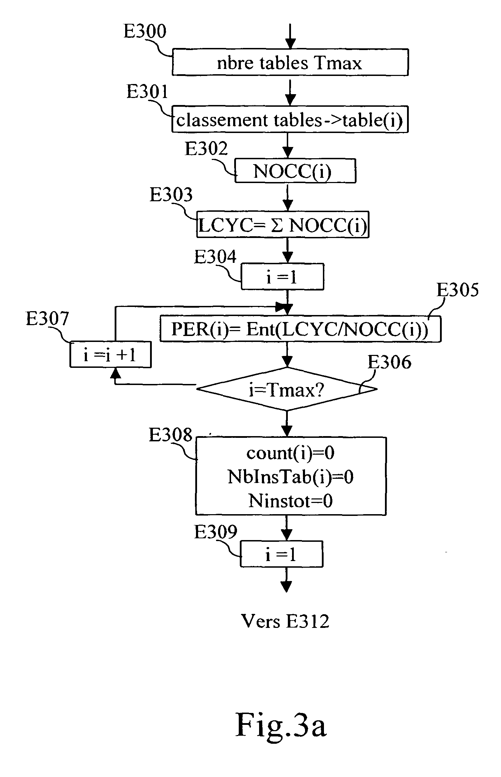

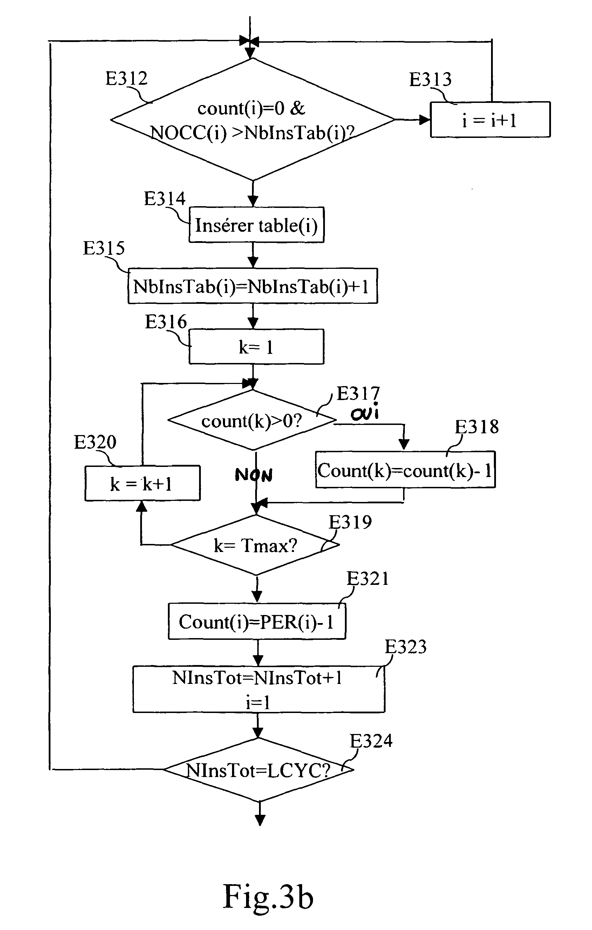

Le serveur 100 détermine le cycle de transmission de ces groupes de données conformément à l'algorithme qui sera décrit en référence aux Figs. 3a et 3b.

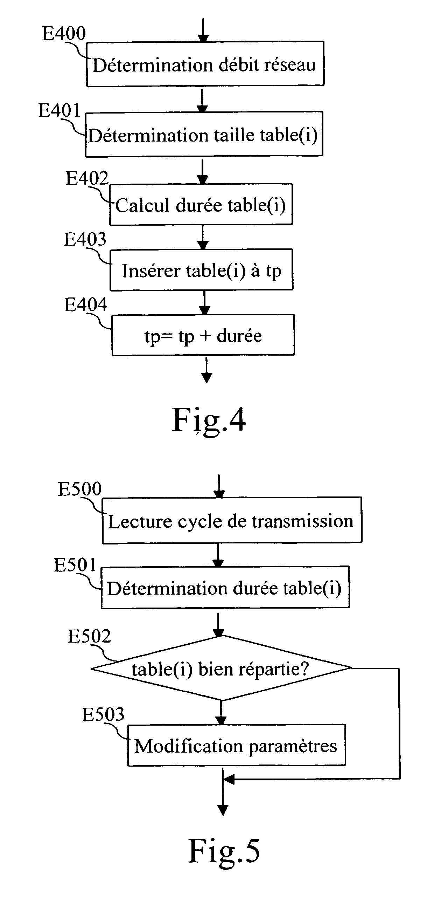

Le serveur 100 transmet ces groupes de données conformément à l'algorithme qui sera décrit en référence à la Fig. 4.

Le serveur 100 analyse les cycles de transmission et modifie si nécessaire les paramètres de transmission conformément à l'algorithme qui sera décrit en référence à la Fig. 5.

Les programmes audiovisuels ainsi que les données associées sont décodés par le dispositif de traitement 170 et reproduits sur l'écran du dispositif de traitement 170 ou en variante sont transférés dans un format approprié à un dispositif de reproduction d'informations audiovisuelles 160 tel que par exemple un téléviseur.

Il est à remarquer ici que dans une variante de réalisation, le réseau de communication 130 peut être aussi un réseau de diffusion Hertzien, par satellite ou par le câble dans lequel les informations ainsi que les groupes de donnés insérés dans un cycle de transmission selon l'invention sont diffusés conformément à la norme DVB.

La **Fig. 2** représente un schéma bloc des différents éléments constitutifs du dispositif de transmission de données de la présente invention.

Ce dispositif de transmission 100 ou serveur est adapté pour former des groupes de données associées à des informations, par exemple des informations audiovisuelles, à déterminer un cycle de transmission de ces groupes de données, à insérer chaque groupe de données dans le cycle de transmission déterminé un nombre de fois fonction de l'importance respective de chaque groupe de données, à transmettre ces groupes de données et à analyser le cycle de transmission formé.

Le dispositif 100 est par exemple un micro-ordinateur. Il peut être aussi intégré dans un moyen de diffusion de méta-données à destination d'un dispositif de reproduction d'informations tel qu'un téléviseur ou intégré à un dispositif de transmission de données à destination de terminaux récepteurs tels que par exemple des téléphones mobiles.

Le dispositif 100 comporte un bus de communication 201 auquel sont reliés un processeur 200, une mémoire morte 202, une mémoire vive 203, un écran 204, un clavier 205, un disque dur 208, un lecteur/enregistreur de disque compact ou CD 209, une interface de communication 206.

Le disque dur 208 mémorise les programmes mettant en oeuvre l'invention ainsi que les variables permettant la transmission de données selon l'invention.

Le disque dur 208 mémorise ainsi les programmes comportant des instructions permettant de mettre en oeuvre les algorithmes représentés aux Figs. 3a, 3b, 4 et 5.

Les données sont par exemple des données représentatives des informations audiovisuelles transmises et/ou des données comprenant des informations pour la configuration d'un moyen de décodage des informations audiovisuelles et/ou des données de signalisation du canal prédéterminé du réseau de télécommunication et/ou des données d'attributs des informations audiovisuelles.

Ces programmes et ces données peuvent aussi être lus par l'intermédiaire du disque compact ou reçus via le réseau de télécommunication 130.

De manière plus générale, les programmes selon la présente invention sont mémorisés dans un moyen de stockage. Ce moyen de stockage est lisible par un ordinateur ou un microprocesseur 200. Ce moyen de stockage est intégré ou non au dispositif, et peut être amovible.

Lors de la mise sous tension du serveur 100, les programmes selon la présente invention sont transférés dans la mémoire vive 203 qui contient alors le code exécutable de l'invention ainsi que les données nécessaires à la mise en oeuvre de l'invention.

Par l'intermédiaire de l'interface entrée/sortie 206, le serveur 100 reçoit du fournisseur 110 des informations audiovisuelles ainsi que des données associées à ces informations. Ces données sont par exemple des méta-données conformes à la norme DVB-SI.

Le serveur 100 est aussi relié par l'intermédiaire de l'interface entrée/sortie 206 à une base de données 120 qui comprend des méta-données qui peuvent être associées à des méta-données conformes à la norme DVB-SI reçues du fournisseur 110.

L'interface 206 permet aussi la transmission des données et des informations auxquelles elles sont associées à destination d'un ou de plusieurs usagers 150 par l'intermédiaire du réseau de télécommunication 130.

Le serveur 100 comporte un écran 204 et un clavier 205 servant d'interface homme machine et permettent ainsi par exemple de définir des priorités entre les différents groupes de données transférés. L'écran 204 et le clavier 205 permettent aussi de modifier les paramètres de transmission des groupes de données. Ces paramètres sont par exemple le débit alloué à la transmission des groupes de données et/ou l'importance des données comprises dans chaque groupe de données.

Les Figs. **3a** et **3b** représentent l'algorithme de transmission de données effectué par le dispositif de transmission selon la présente invention.

Le processeur 200 du dispositif de transmission ou serveur 100 lit, à partir de la mémoire 203, les instructions du programme correspondant aux étapes E300 à E324 des Figs. 3a et 3b et les charge en mémoire vive 203 pour les exécuter.

A l'étape E300, le processeur 200 du serveur 100 détermine le nombre Tmax de groupes de données devant être insérés dans le cycle de transmission et transmis aux usagers 150. Les groupes de données sont préférentiellement représentés sous forme de tables.

A titre d'exemple, quatre tables doivent être insérées dans le cycle de transmission. Ces tables sont par exemple une table notée TM4, une table notée TMD, une table notée TST et une table notée TAV.

La table TM4 comprend des données pour la configuration d'un moyen de décodage des informations audiovisuelles codées selon la norme MPEG4. MPEG est l'acronyme de Moving Picture Experts Group.

La table TMD comprend des données représentatives du contenu des programmes audiovisuels transmis. La table TMD comprend par exemple les méta-données telles que le guide des programmes audiovisuels transmis, ou pour un programme audiovisuel prédéterminé, des données descriptives de ce programme telles que son titre, une description sommaire et/ou détaillée de celui-ci, un descriptif d'un ou des acteurs jouant dans le programme audiovisuel ou une ou plusieurs critiques de celui-ci.

La table TST comprend des informations de signalisation de transport des informations audiovisuelles. La table TST comprend entre autres l'adresse Internet de Multicast ou adresse de transmission à une pluralité d'usagers des informations audiovisuelles.

Cette adresse permet à de multiples usagers sous réserve de souscription à un tel service de recevoir les programmes audiovisuels transmis par le serveur 100 sur le réseau Internet 130.

La table TAV comprend des données représentatives des attributs des informations audiovisuelles transmises sur le réseau Internet 130. Ces attributs sont par exemple le format de l'image tel que par exemple le format 16/9 ou le format 4/3/.

Cette opération effectuée, le processeur 200 passe ensuite à l'étape suivante E301.

A cette étape, le processeur 200 ordonne les tables de données TM4, TST, TMD et TAV selon leur importance respective.

Il est à remarquer ici que l'importance de chacune des tables de données est prédéfinie, c'est-à-dire qu'une information représentative de l'importance de chaque table est associée à chaque table.

Selon une variante, l'importance de chacune des tables de données est saisie par un superviseur par l'intermédiaire du clavier 205 du serveur 100.

L'information associée à chaque table et représentative de l'importance des données contenues dans la table de données à laquelle elle est associée est préférentiellement un nombre représentatif du nombre d'insertions de la table à laquelle elle est associée dans le cycle de transmission.

Par exemple, l'information représentative de la table TST est à la valeur quatre, l'information représentative de la table TST est à la valeur un, l'information représentative de la table TM4 est à la valeur deux, l'information représentative de la table TAV est à la valeur un.

Le processeur 200 ordonne ainsi les tables TM4, TST, TMD et TAV de la façon suivante : la table TST étant la table la plus importante est classée en tant que première table notée table(1), la table TM4 étant la table la plus importante parmi les tables non encore classées est classée en tant que seconde table notée table(2), les tables TMD et TAV étant les tables de moindre importance sont classées respectivement troisième et quatrième tables notées respectivement table(3) et table(4).

Cette opération effectuée, le processeur 200 affecte à l'étape E302 la valeur de chaque information représentative associée à chaque table(i) à une variable notée NOCC(i) où i est le rang respectif de chaque table classée. La variable NOCC(i) est représentative du nombre d'insertions de la table de données à laquelle elle est associée. Ainsi, la variable NOCC(1) est égale à quatre, la variable NOCC(2) est égale à deux, la variable NOCC(3) est égale à un et la variable NOCC(4) est égale à un.

Cette opération effectuée, le processeur 200 calcule à l'étape E303 le nombre total d'insertions LCYC devant être effectuées dans le cycle de transmission ainsi déterminé. Ceci est effectué en additionnant les valeurs des variables NOCC(i) précédemment déterminées.

Selon notre exemple, le nombre total d'insertions LCYC est égal à la valeur huit.

Cette opération effectuée, le processeur 200 passe à l'étape suivante E304 et met la variable i à la valeur un.

Le processeur 200 passe ensuite à l'étape E305 et détermine la périodicité d'insertions de la table en cours de traitement dans le cycle de transmission.

Le processeur 200 détermine cette périodicité PER(i) en prenant la partie entière du résultat de la division du nombre total d'insertions LCYC par le nombre d'insertions NOCC(i) correspondant à la table(i) en cours de traitement.

Selon notre exemple, le processeur 200 détermine la périodicité PER(1) de la table(1) dans le cycle de transmission. Cette périodicité est en l'occurrence égale à deux.

Cette opération effectuée, le processeur 200 vérifie à l'étape E306 si la variable i est égale au nombre Tmax de tables de données devant être insérées.

Dans la négative, le processeur incrémente d'une unité la variable i à l'étape E307 et retourne à l'étape E305 précédemment décrite.

Les étapes E305 à E307 sont ainsi réitérées autant de fois qu'il existe de tables de données à insérer.

Selon notre exemple, le processeur 200 détermine la périodicité PER(2) de la table(2) dans le cycle de transmission. Cette périodicité est en l'occurrence égale à quatre. Le processeur 200 détermine aussi les périodicités PER(3) et PER(4) des table(3) et table(4). Ces périodicités sont dans notre exemple égales à huit.

Lorsque la variable i est égale au nombre Tmax de tables de données devant être insérées, le processeur 200 passe à l'étape E308.

A cette étape, le processeur 200 initialise les variables count(1), count(2), count(3), count(4), NbInsTab(1), NbInsTab(2), NbInsTab(3), NbInsTab(4) et Ninstot à zéro.

A l'étape suivante E309, le processeur 200 initialise la variable i à la valeur 1 et passe à l'étape suivante E312 de la Fig. 3b.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

La variable i représente l'indice de la table de données en cours de traitement. La variable count(i) est la valeur d'un compteur associé à la table de données en cours de traitement et est représentative du nombre minimum d'insertions d'autres groupes de données avant une insertion du groupe de données auquel chaque compteur est associé dans le cycle d'insertion. La variable NbInsTab(i) est représentative du nombre d'insertions de la table de données déjà effectuées dans le cycle de transmission.

Selon notre exemple, la variable i est égale à la valeur un, la variable count(1) est égale à zéro et la variable NbInsTab(1) est inférieure à la variable NOCC(1), en l'occurrence égale à quatre. Le processeur 200 passe donc à l'étape suivante E314.

A cette étape, le processeur 200 insère la table de données notée table(1) dans le cycle de transmission pour une transmission de celle-ci. Cette transmission sera détaillée ultérieurement en regard de la Fig. 4.

Cette opération réalisée, le processeur 200 passe ensuite à l'étape E315 et incrémente la variable NbInsTab(i) d'une unité. En l'occurrence, la variable NbInsTab(1) est mise à la valeur 1.

Cette opération réalisée, le processeur 200 passe à l'étape suivante E316 et initialise une variable notée k à la valeur un.

Cette opération effectuée, le processeur 200 vérifie à l'étape suivante E317 si la variable count(k) est strictement positive.

Dans l'affirmative, le processeur 200 passe à l'étape E318 et décrémente la variable count(k) d'une unité et passe ensuite à l'étape E319.

Si la variable count(k) est nulle ou inférieure à zéro, le processeur 200 passe à l'étape E319.

Il est à remarquer ici qu'en variante, le test de l'étape E317 n'est pas effectué et la valeur du compteur count(i) est systématiquement décrémentée d'une unité. La condition d'égalité de la valeur count(i) à zéro de l'étape E312 est selon cette variante remplacée par la condition d'infériorité ou d'égalité de cette variable à zéro.

A l'étape E319, le processeur 200 vérifie si la variable k est égale au nombre de tables de données à insérer.

Dans la négative, le processeur 200 passe à l'étape E320, incrémente la variable k d'une unité et retourne à l'étape E317 précédemment décrite.

Le processeur 200 réitère la boucle constituée des étapes E317 à E320 tant que toutes les variables count(k) n'ont pas été traitées.

Ainsi, selon notre exemple, les variables count(1), count(2), count(3) et count(4) sont à la valeur nulle.

Ces opérations réalisées, le processeur 200 passe à l'étape E321 et met la variable count(i) associée à la table précédemment insérée à l'étape E314 à la valeur égale à la périodicité d'insertion PER(i) de la table de données courante décrémentée d'une unité. Cette valeur correspond au nombre minimum d'insertions d'autres groupes de données avant une insertion du groupe de données courant dans le cycle d'insertion.

Selon notre exemple, la variable count(1) est ainsi mise à la valeur un.

Cette opération effectuée, le processeur 200 passe ensuite à l'étape suivante E323.

A cette étape, le processeur 200 incrémente la variable NInsTot d'une unité et met la variable i à la valeur un.

Cette opération effectuée, le processeur 200 vérifie à l'étape suivante E324 si la variable NinsTot est égale au nombre total d'insertions LCYC devant être effectuées dans le cycle de transmission.

Dans la négative, le processeur 200 retourne à l'étape E312.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

Selon notre exemple, la variable i est égale à la valeur un, la variable count(1) est égale à un.

Lorsque le test de l'étape E312 est négatif, le processeur 200 passe à l'étape E313 et incrémente la variable i d'une unité.

Cette opération effectuée, le processeur 200 passe à l'étape E312.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

Selon notre exemple, la variable i est égale à la valeur deux, la variable count(2) est égale à zéro et la variable NOCC(2) égale à deux est supérieure à la variable NbInsTab(2). Le processeur 200 passe donc à l'étape suivante E314.

A cette étape, le processeur 200 insère la table de données notée table(2) dans le cycle de transmission pour une transmission de celle-ci.

Cette opération réalisée, le processeur 200 effectue les étapes E315 à E320 de la même manière que celle décrite précédemment

Ainsi, selon notre exemple, les variables count(1), count(2), count(3) et count(4) sont à la valeur nulle.

Ces opérations réalisées, le processeur 200 passe à l'étape E321 et met la variable count(i) associée à la table précédemment insérée à l'étape E314 à la valeur égale à la périodicité d'insertion PER(i) de la table de données courante décrémentée d'une unité.

Selon notre exemple, la variable count(2) est ainsi mise à la valeur trois.

Cette opération effectuée, le processeur 200 passe ensuite à l'étape suivante E323.

A cette étape, le processeur 200 incrémente la variable NInsTot d'une unité et met la variable i à la valeur un.

Cette opération effectuée, le processeur 200 vérifie à l'étape suivante E324 si la variable NinsTot est égale au nombre total d'insertions LCYC devant être effectuées dans le cycle de transmission.

Dans la négative, le processeur 200 retourne à l'étape E312.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

Selon notre exemple, la variable i est égale à la valeur un, la variable count(1) est égale à zéro.

Lorsque le test de l'étape E312 est positif, le processeur 200 passe à l'étape E314.

A cette étape, le processeur 200 insère la table de données notée table(1) dans le cycle de transmission pour une transmission de celle-ci.

Cette opération réalisée, le processeur 200 effectue les étapes E315 à E320 de la même manière que celle décrite précédemment

Ainsi, selon notre exemple, les variables count(1), count(3) et count(4) sont à la valeur nulle. La variable count(2) est alors à la valeur 2.

Ces opérations réalisées, le processeur 200 passe à l'étape E321 et met la variable count(1) associée à la table précédemment insérée à l'étape E314 à la valeur égale à la périodicité d'insertion PER(i) de la table de données courante décrémentée d'une unité.

Selon notre exemple, la variable count(1) est ainsi mise à la valeur un. Cette opération effectuée, le processeur 200 passe ensuite à l'étape suivante E323.

A cette étape, le processeur 200 incrémente la variable NInsTot d'une unité et met la variable i à la valeur un.

Cette opération effectuée, le processeur 200 vérifie à l'étape suivante E324 si la variable NinsTot est égale au nombre total d'insertions LCYC devant être effectuées dans le cycle de transmission.

Dans la négative, le processeur 200 retourne à l'étape E312.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

Selon notre exemple, la variable i est égale à la valeur un, la variable count(1) est égale à un.

Lorsque le test de l'étape E312 est négatif, le processeur 200 passe à l'étape E313 et incrémente la variable i d'une unité.

Cette opération effectuée, le processeur 200 passe à l'étape E312.

A l'étape E312, le processeur 200 détermine quelle table doit être insérée dans le cycle de transmission.

Pour cela, le processeur 200 vérifie si la valeur de la variable count(i) est égale à zéro et si la variable NOCC(i) est supérieure à la variable NbInsTab(i).

Selon notre exemple, la variable i est égale à la valeur deux, la variable count(2) est égale à deux.

Lorsque le test de l'étape E312 est négatif, le processeur 200 passe à l'étape E313 et incrémente la variable i d'une unité.

Cette opération effectuée, le processeur 200 passe à l'étape E312.

Le processeur 200 vérifie à cette étape si la valeur de la variable count(i) est égale à zéro et si la variable NOCC(i) est supérieure à la variable NbInsTab(i).

Selon notre exemple, la variable i est égale à la valeur trois, la variable count(3) est nulle et la variable NOCC(3) égale à un est supérieure à la variable NbInsTab(3). Le processeur 200 passe donc à l'étape suivante E314.

A cette étape, le processeur 200 insère la table de données notée table(3) dans le cycle de transmission pour une transmission de celle-ci.

Cette opération réalisée, le processeur 200 effectue les étapes E315 à E323 de la même manière que celle décrite précédemment

Cette opération effectuée, le processeur 200 vérifie à l'étape suivante E324 si la variable NInsTot est égale au nombre total d'insertions LCYC devant être effectuées dans le cycle de transmission.

Dans la négative, le processeur 200 retourne à l'étape E312.

Le processeur 200 effectue ainsi la boucle constituée des étapes E312 à E320 et insère les différentes tables de données un nombre de fois correspondant à l'importance des données contenues dans ces tables.

Ainsi, sont ainsi insérées chronologiquement les tables de données table(1), table(2), table(1), table(3), table(1), table(2), table(1) et table(4).

Il est à remarquer ici que l'algorithme tel que précédemment décrit forme un cycle de transmission en temps et insère en temps réel les groupes de données dans ce cycle en fonction de leur importance.

Les groupes de données sont insérés chronologiquement selon leur importance. Le nombre d'insertions effectué pour chaque groupe de données est fonction de son importance et les groupes de données insérés plusieurs fois dans le cycle de transmission sont espacés d'un nombre prédéterminé d'insertions d'autres groupes de données dans le cycle de transmission.

Lorsque le test E324 est positif, le processeur 200 termine l'insertion des groupes de données dans le cycle d'insertions déterminé. Le processeur 200 retourne alors à l'étape E300 et réitère l'algorithme constitué des étapes E300 à E324.

Le processeur 200 réitère ces étapes immédiatement après l'étape E324 ou attend un temps prédéterminé avant de réitérer une nouvelle fois ces étapes.

La Fig. 4 représente l'algorithme de transmission de données effectué par le dispositif de transmission selon la présente invention.

Le processeur 200 du dispositif de transmission ou serveur 100 lit, à partir de la mémoire 203, les instructions du programme correspondant aux étapes E400 à E404 de la Fig. 4 et les charge en mémoire vive 203 pour les exécuter.

L'algorithme de la Fig. 4 est exécuté à chaque insertion d'une table de données dans le cycle de transmission à l'étape E314 de l'algorithme de la Fig. 3b.

A l'étape E400, le processeur 200 du serveur 100 détermine le débit du réseau de télécommunication 130. Le débit du réseau de télécommunication 130 est par exemple un débit prédéterminé ou un débit fixé par le superviseur du serveur 100.

A l'étape suivante E401, le processeur 200 détermine la taille de la table de données à transmettre.

Cette opération effectuée, le processeur 200 calcule à l'étape E402 la durée de transmission de la table de données à transmettre. Cette durée est calculée en divisant la taille de la table de données déterminée à l'étape E401 par le débit du réseau déterminé à l'étape E400.

A l'étape suivante E403, le processeur 200 transmet la table de données à l'instant tp.

L'instant tp est l'instant auquel la précédente table de données a été transmise en totalité sur le réseau Internet. Cet instant tp a été calculé lors de la transmission de la précédente table de données.

A l'étape E404, le processeur 200 calcule l'instant tp de transmission de la prochaine table de données. Cet instant de transmission est déterminé en additionnant l'instant de transmission courant avec la durée de transmission calculée à l'étape E402 précédemment décrite.

Cette opération réalisée, l'algorithme de la Fig. 4 se termine et le processeur 200 retourne à l'étape E315 de l'algorithme de la Fig. 3a.

La Fig. 5 représente l'algorithme d'analyse de cycle de transmission effectué par le dispositif de transmission selon la présente invention.

Le processeur 200 du dispositif de transmission ou serveur 100 lit, à partir de la mémoire 203, les instructions du programme correspondant aux étapes E500 à E503 de la Fig. 5 et les charge en mémoire vive 203 pour les exécuter.

Périodiquement, le processeur 200 du serveur 100 exécute le présent algorithme en parallèle des algorithmes des Figs. 3a, 3b et 4 précédemment décrits.

Cet algorithme permet une évaluation de la pertinence des paramètres utilisés pour la transmission de groupes de données selon la présente invention.

A l'étape E500, le processeur 200 lit les différents groupes de données ou tables de données insérées dans le cycle de transmission et transmis sur le réseau de télécommunication 130.

Le processeur 200 détermine ensuite à l'étape E501 pour une ou plusieurs table de données la durée de transmission de la ou des tables de données insérées dans le cycle de transmission conformément à l'algorithme des Figs. 3a et 3b.

A l'étape suivante E502, le processeur 200 vérifie si la ou les tables de données sont correctement réparties dans le cycle de transmission.

En effet, selon la taille d'une table de données et son importance, il peut dans certains cas être nécessaire de modifier l'importance de cette table de données pour garantir une fréquence d'insertion minimale de cette table dans le cycle de transmission.

Si la ou les tables de données sont réparties correctement dans le cycle de transmission, le processeur 200 termine l'algorithme.

Si la répartition n'est pas correcte, le processeur 200 passe à l'étape E503.

A cette étape, le processeur 200 modifie le débit du canal de transmission et/ou modifie les informations représentatives de l'importance des données d'une ou de plusieurs tables de données et/ou supprime ou ajoute des tables dans le cycle de transmission.

Cette opération réalisée, le processeur 200 termine l'algorithme.

Bien entendu, la présente invention n'est nullement limitée aux modes de réalisation décrits ici, mais englobe, bien au contraire, toute variante à la portée de l'homme du métier.

## Revendications

1. Procédé de transmission de groupes de données de différentes importances, les données des groupes de données étant associées à des informations transmises sur un réseau de communication, le procédé comportant les étapes (E305, E312) de détermination d'un cycle de transmission des groupes de données, d'insertion (E314) dans le cycle de transmission déterminé de chaque groupe de données un nombre de fois fonction de l'importance respective des données du groupe de données, **caractérisé en ce que** le procédé comporte en outre les étapes de:
- analyse (E500, E501, E502) du cycle de transmission comprenant les groupes de données insérés,
- modification (E503), en fonction de l'analyse du cycle de transmission, du débit du canal de transmission et/ou de l'importance des données d'au moins un groupe de données.

2. Procédé selon la revendication 1, **caractérisé en ce que** le réseau de communication (130) est un réseau de diffusion, les informations et les données étant transmises sur le réseau de diffusion.

3. Procédé selon la revendication 1, **caractérisé en ce que** le réseau de communication (130) est un réseau de télécommunication, les informations étant transmises sur un canal de transmission du réseau de télécommunication et les groupes de données étant transmis sur un canal prédéterminé du réseau de télécommunication différent du canal sur lequel les informations sont transmises.

4. Procédé selon la revendication 3, **caractérisé en ce qu'**à chaque insertion d'un groupe de données dans le cycle de transmission des groupes de données, le procédé comporte en outre une étape (E403) de transmission du groupe de données inséré.

5. Procédé selon la revendication 4, **caractérisé en ce que** si un groupe de données est inséré plusieurs fois dans le cycle de transmission, les insertions du groupe de données sont espacées d'un nombre prédéterminé d'insertions d'autres groupes de données dans le cycle de transmission.

6. Procédé selon la revendication 5, **caractérisé en ce que** les groupes de données sont insérés dans le cycle de transmission selon un ordre fonction de leur importance vis-à-vis des autres groupes de données.

7. Procédé selon la revendication 6, **caractérisé en ce que** le procédé comporte les étapes de :
- ordonnancement (E301) des groupes de données en fonction de leur importance,
- association d'un compteur à chaque groupe de données, la valeur de chaque compteur étant représentative du nombre minimum d'insertions d'autres groupes de données avant une insertion du groupe de données auquel chaque compteur est associé dans le cycle d'insertion,
- détermination (E312) du groupe de données à insérer en fonction de l'ordre des groupes de données, de la valeur des compteurs associés et du nombre de fois qu'au moins un groupe de données a été inséré dans le cycle de transmission.

8. Procédé selon la revendication 7, **caractérisé en ce que** préalablement à la première insertion d'un groupe de données dans le cycle de transmission, chaque compteur est mis à une valeur prédéterminée, à chaque insertion d'un groupe de données, le compteur associé au groupe de données inséré est mis à une valeur égale au nombre d'insertions d'autres groupes de données espaçant les insertions du groupe de données auquel le compteur est associé et à chaque insertion d'un groupe de données dans le cycle de transmission, la valeur de chaque compteur associé aux autres groupes de données est décrémentée.

9. Procédé selon la revendication 8, **caractérisé en ce qu'**à chaque insertion d'un groupe de données, le procédé comporte les étapes de :
- sélection du premier des groupes de données ordonnés comme groupe de données courant,
- si la valeur du compteur associé au groupe de données courant est strictement supérieure à la valeur prédéterminée, sélection du groupe de données suivant des groupes de données ordonnés comme le groupe de données courant.

10. Procédé selon la revendication 9, **caractérisé en ce que** le procédé comporte une étape de détermination de l'instant d'insertion (E404) d'un groupe de données, l'instant d'insertion étant déterminé à partir de la taille du ou des groupes de données préalablement insérés et du débit du canal de transmission.

11. Procédé selon la revendication 10, **caractérisé en ce que** le procédé comporte les étapes de :
- détermination du nombre total d'insertions de groupes de données à insérer dans le cycle de transmission et lorsque des groupes de données ont été insérés dans le cycle de transmission un nombre de fois égal au nombre total d'insertions, le procédé comporte les étapes de :
- attente d'un temps prédéterminé,
- détermination d'un nouveau cycle de transmission,
- insertion des groupes de données dans le nouveau cycle de transmission déterminé.

12. Procédé selon la revendication 11, **caractérisé en ce que** le temps prédéterminé est nul.

13. Procédé selon l'une quelconque des revendications 1 à 12, **caractérisé en ce que** les informations sont des informations audiovisuelles et **en ce que** les données des groupes de données sont des données comprenant des informations pour la configuration d'un moyen de décodage des informations audiovisuelles et/ou des données représentatives des contenus des informations audiovisuelles transmises et/ou des données de signalisation du ou de chaque canal du réseau de télécommunication comportant les informations transmises et/ou des données d'attributs des informations audiovisuelles.

14. Dispositif de transmission de groupes de données de différentes importances, les données des groupes de données étant associées à des informations transmises sur un réseau de communication (130), le dispositif de transmission comportant des moyens (200) de détermination d'un cycle de transmission des groupes de données, des moyens (200) d'insertion dans le cycle de transmission déterminé de chaque groupe de données un nombre de fois fonction de l'importance respective des données du groupe de données, **caractérisé en ce que** le dispositif de transmission comporte en outre:
- des moyens (200) d'analyse du cycle de transmission comprenant les groupes de données insérés,
- des moyens (200) de momification, en fonction de l'analyse du cycle de transmission, du débit du canal de transmission et/ou de l'importance des données d'au moins un groupe de données.

15. Programme d'ordinateur stocké sur un support d'informations, ledit programme comportant des instructions permettant de mettre en oeuvre le procédé de transmission selon l'une quelconque des revendications 1 à 13, lorsqu'il est chargé et exécuté par un système informatique.

## Claims

1. Method of transmitting groups of data of differing importance levels, the data of the groups of data being associated with information transmitted over a communication network, the method comprising the steps (E305, E312) for determining a transmission cycle for the groups of data, inserting (E314) into the determined transmission cycle each group of data a number of times dependent on the respective importance of the data of the group of data, **characterized in that** the method also comprises the steps for:
- analysing (E500, E501, E502) the transmission cycle including the inserted groups of data,
- modifying (E503), according to the analysis of the transmission cycle, the bit rate of the transmission channel and/or the importance of the data of at least one group of data.

2. Method according to Claim 1, **characterized in that** the communication network (130) is a broadcast network, the information and the data being transmitted over the broadcast network.

3. Method according to Claim 1, **characterized in that** the communication network (130) is a telecommunication network, the information being transmitted over a transmission channel of the telecommunication network and the groups of data being transmitted over a predetermined channel of the telecommunication network that is different from the channel over which the information is transmitted.

4. Method according to Claim 3, **characterized in that**, each time a group of data is inserted into the transmission cycle of the groups of data, the method also comprises a step (E403) for transmitting the inserted group of data.

5. Method according to Claim 4, **characterized in that**, if a group of data is inserted a number of times into the transmission cycle, the insertions of the group of data are spaced apart by a predetermined number of insertions of other groups of data into the transmission cycle.

6. Method according to Claim 5, **characterized in that** the groups of data are inserted into the transmission cycle in an order dependent on their importance with respect to the other groups of data.

7. Method according to Claim 6, **characterized in that** the method comprises the steps for:
- scheduling (E301) the groups of data according to their importance,
- associating a counter with each group of data, the value of each counter being representative of the minimum number of insertions of other groups of data before an insertion of the group of data with which each counter is associated into the insertion cycle,
- determining (E312) the group of data to be inserted according to the order of the groups of data, the value of the associated counters and the number of times that at least one group of data has been inserted into the transmission cycle.

8. Method according to Claim 7, **characterized in that**, prior to the first insertion of a group of data into the transmission cycle, each counter is set to a predetermined value, each time a group of data is inserted, the counter associated with the inserted group of data is set to a value equal to the number of insertions of other groups of data spacing the insertions of the group of data with which the counter is associated and, each time a group of data is inserted into the transmission cycle, the value of each counter associated with the other groups of data is decremented.

9. Method according to Claim 8, **characterized in that**, each time a group of data is inserted, the method comprises the steps for:
- selecting the first of the scheduled groups of data as the current group of data,
- if the value of the counter associated with the current group of data is strictly greater than the predetermined value, selecting the next group of data of the scheduled groups of data as the current group of data.

10. Method according to Claim 9, **characterized in that** the method comprises a step for determining the time of insertion (E404) of a group of data, the time of insertion being determined from the size of the group(s) of data previously inserted and the bit rate of the transmission channel.

11. Method according to Claim 10, **characterized in that** the method comprises the steps for:
- determining the total number of insertions of groups of data to be inserted into the transmission cycle, and, when groups of data have been inserted into the transmission cycle a number of times equal to the total number of insertions, the method comprises the steps for:
- waiting for a predetermined time,
- determining a new transmission cycle,
- inserting the groups of data into the new determined transmission cycle.

12. Method according to Claim 11, **characterized in that** the predetermined time is zero.

13. Method according to any one of Claims 1 to 12, **characterized in that** the information is audiovisual information and **in that** the data of the groups of data is data including information for configuring a means of decoding the audiovisual information and/or data representative of the contents of the audiovisual information transmitted and/or signalling data for the or each channel of the telecommunication network comprising the transmitted information and/or the attribute data of the audiovisual information.

14. Device for transmitting groups of data of differing importance levels, the data of the groups of data being associated with information transmitted over a communication network (130), the transmission device comprising means (200) of determining a transmission cycle for the groups of data, means (200) of inserting into the determined transmission cycle each group of data a number of times dependent on the respective importance of the data of the group of data, **characterized in that** the transmission device also comprises:
- means (200) of analysing the transmission cycle including the inserted groups of data,
- means (200) of modifying, according to the analysis of the transmission cycle, the bit rate of the transmission channel and/or the importance of the data of at least one group of data.

15. Computer program stored on an information medium, said program comprising instructions for applying the transmission method according to any one of Claims 1 to 13, when it is loaded and run by a computer system.

## Patentansprüche

1. Verfahren zur Übertragung von Datengruppen unterschiedlicher Wichtigkeit, wobei die Daten der Datengruppen Informationen zugeordnet sind, die über ein Kommunikationsnetz übertragen werden, wobei das Verfahren die Schritte (E305, E312) der Bestimmung eines Übertragungszyklus der Datengruppen und der Einfügung (E314) jeder Datengruppe in den bestimmten Übertragungszyklus mit einer von der jeweiligen Wichtigkeit der Daten der Datengruppe abhängigen Häufigkeit aufweist, **dadurch gekennzeichnet, dass** das Verfahren außerdem die folgenden Schritte aufweist:
- Analyse (E500, E501, E502) des die eingefügten Datengruppen enthaltenden Übertragungszyklus,
- Veränderung (E503), in Abhängigkeit von der Analyse des Übertragungszyklus, des Durchsatzes des Übertragungskanals und/oder der Wichtigkeit der Daten mindestens einer Datengruppe.

2. Verfahren nach Anspruch 1, **dadurch gekennzeichnet, dass** das Kommunikationsnetz (130) ein Diffusionsnetz ist, wobei die Informationen und die Daten über das Diffusionsnetz übertragen werden.

3. Verfahren nach Anspruch 1, **dadurch gekennzeichnet, dass** das Kommunikationsnetz (130) ein Telekommunikationsnetz ist, wobei die Informationen auf einem Übertragungskanal des Telekommunikationsnetzes übertragen werden und die Datengruppen auf einem vorbestimmten Kanal des Telekommunikationsnetzes übertragen werden, der sich von dem Kanal unterscheidet, auf dem die Informationen übertragen werden.

4. Verfahren nach Anspruch 3, **dadurch gekennzeichnet, dass** es bei jeder Einfügung einer Datengruppe in den Übertragungszyklus der Datengruppen weiter einen Schritt (E403) der Übertragung der eingefügten Datengruppe aufweist.

5. Verfahren nach Anspruch 4, **dadurch gekennzeichnet, dass**, wenn eine Datengruppe mehrere Male in den Übertragungszyklus eingefügt wird, die Einfügungen der Datengruppe durch eine vorgegebene Anzahl von Einfügungen anderer Datengruppen in den Übertragungszyklus getrennt sind.

6. Verfahren nach Anspruch 5, **dadurch gekennzeichnet, dass** die Datengruppen in den Übertragungszyklus gemäß einer Reihenfolge eingefügt werden, die von ihrer Wichtigkeit im Vergleich mit den anderen Datengruppen abhängt.

7. Verfahren nach Anspruch 6, **dadurch gekennzeichnet, dass** es die folgenden Schritte aufweist:
- Ordnung (E301) der Datengruppen in Abhängigkeit von ihrer Wichtigkeit,
- Zuordnung eines Zählers zu jeder Datengruppe, wobei der Wert jedes Zählers für die Mindestanzahl von Einfügungen anderer Datengruppen vor einer Einfügung der Datengruppe repräsentativ ist, der jeder Zähler im Einfügungszyklus zugeordnet wird,
- Bestimmung (E312) der einzufügenden Datengruppe in Abhängigkeit von der Reihenfolge der Datengruppen, dem Wert der zugeordneten Zähler und der Häufigkeit, mit der mindestens eine Datengruppe in den Übertragungszyklus eingefügt wurde.

8. Verfahren nach Anspruch 7, **dadurch gekennzeichnet, dass** vor der ersten Einfügung einer Datengruppe in den Übertragungszyklus jeder Zähler auf einen vorbestimmten Wert gebracht wird, bei jeder Einfügung einer Datengruppe der der Datengruppe zugeordnete Zähler auf einen Wert gleich der Anzahl von Einfügungen anderer Datengruppen gebracht wird, die die Einfügungen der Datengruppe, der der Zähler zugeordnet ist, trennen, und bei jeder Einfügung einer Datengruppe in den Übertragungszyklus der Wert jedes den anderen Datengruppen zugeordneten Zählers dekrementiert wird.

9. Verfahren nach Anspruch 8, **dadurch gekennzeichnet, dass** es bei jeder Einfügung einer Datengruppe die folgenden Schritte aufweist:
- Auswahl der ersten der geordneten Datengruppen als laufende Datengruppe,
- wenn der Wert des der laufenden Datengruppe zugeordneten Zählers strikt höher ist als der vorbestimmte Wert, Auswahl der folgenden Datengruppe der geordneten Datengruppen als laufende Datengruppe.

10. Verfahren nach Anspruch 9, **dadurch gekennzeichnet, dass** es einen Schritt der Bestimmung des Einfügungszeitpunkts (E404) einer Datengruppe aufweist, wobei der Einfügungszeitpunkt ausgehend von der Größe der vorher eingefügten Datengruppe oder Datengruppen und vom Durchsatz des Übertragungskanals bestimmt wird.

11. Verfahren nach Anspruch 10, **dadurch gekennzeichnet, dass** es die folgenden Schritte aufweist:
- Bestimmung der Gesamtzahl von Einfügungen von in den Übertragungszyklus einzufügenden Datengruppen, und wenn Datengruppen in den Übertragungszyklus mit einer Häufigkeit gleich der Gesamtzahl der Einfügungen eingeführt wurden, das Verfahren folgende Schritte aufweist:
- Warten während einer vorbestimmten Zeit,
- Bestimmung eines neuen Übertragungszyklus,
- Einfügung der Datengruppen in den neuen bestimmten Übertragungszyklus.

12. Verfahren nach Anspruch 11, **dadurch gekennzeichnet, dass** die vorbestimmte Zeit Null ist.

13. Verfahren nach einem der Ansprüche 1 bis 12, **dadurch gekennzeichnet, dass** die Informationen audiovisuelle Informationen sind, und dass die Daten der Datengruppen Daten, die Informationen für die Konfiguration eines Decodiermittels der audiovisuellen Informationen enthalten, und/oder Daten, die für die Inhalte der übertragenen audiovisuellen Informationen repräsentativ sind, und/oder Signalisationsdaten des oder jedes Kanals des Telekommunikationsnetzes, der die übertragenen Informationen aufweist und/oder Attributdaten der audiovisuellen Informationen sind.

14. Vorrichtung zur Übertragung von Datengruppen verschiedener Wichtigkeiten, wobei die Daten der Datengruppen Informationen zugeordnet sind, die über ein Kommunikationsnetz (130) übertragen werden, wobei die Übertragungsvorrichtung Mittel (200) zur Bestimmung eines Übertragungszyklus der Datengruppen und Mittel (200) zur Einfügung jeder Datengruppe in den bestimmten Übertragungszyklus mit einer Häufigkeit aufweist, die von der jeweiligen Wichtigkeit der Daten der Datengruppe abhängt, **dadurch gekennzeichnet, dass** die Übertragungsvorrichtung außerdem aufweist:
- Mittel (200) zur Analyse des Übertragungszyklus, der die eingefügten Datengruppen aufweist,
- Mittel (200) zur Veränderung, in Abhängigkeit von der Analyse des Übertragungszyklus, des Durchsatzes des Übertragungskanals und/oder der Wichtigkeit der Daten mindestens einer Datengruppe.

15. Computerprogramm, das auf einem Informationsträger gespeichert ist, wobei das Programm Anweisungen enthält, die es ermöglichen, das Übertragungsverfahren nach einem der Ansprüche 1 bis 13 anzuwenden, wenn es von einem EDV-System geladen und ausgeführt wird.
